# EUROPEAN PATENT SPECIFICATION

(11) **EP 0 422 893 B1**
(45) Date of publication and mention of the grant of the patent: **23.06.1993**
(21) Application number: 90311049.2
(22) Date of filing: 09.10.1990
(51) Int. Cl.: B01D 21/01, B01D 21/06, B01D 21/32

(54) **Process and apparatus for decantation of suspensions**
Verfahren und Vorrichtung zum Dekantieren von Suspensionen
Procédé et appareil pour la décantation de suspensions

(30) Priority: 13.10.1989 US 421268
(43) Date of publication of application: 17.04.1991
(73) Proprietor: ALCAN INTERNATIONAL LIMITED, Montreal Quebec H3A 3G2 (CA)
(72) Inventor: Bagatto, Peter Francis, Jonquiere, Quebec G7S 3L3 (CA); Dancose, Bernard Paul, Chicoutimi, Quebec G7H 6G4 (CA); Harrington, Pierre Charles, Jonquiere, Quebec G7S 5N6 (CA); Jean, Gaston Marcel, Chicoutimi, Quebec G7J 3W5 (CA); Lepage, Marc Aurele, Jonquiere, Quebec G7X 1R3 (CA)
(74) Representative: Wilkinson, Stephen John

(56) References cited:
- EP-A- 0 158 714
- US-A- 2 095 546
- US-A- 4 222 879
- US-A- 4 226 714

## Description

This invention relates generally to the decantation of suspension, and more particularly to a process and apparatus for decanting at temperatures at and above the atmospheric boiling point of the liquid.

Decantation systems of the general type described herein are already known and are often referred to as continuous thickeners. The purpose of such systems is to obtain sedimentation, i.e. gravitational settling of solid particles suspended in a liquid. The settled solid particles are withdrawn at the bottom of the apparatus and the clarified liquid, freed from the solid particles, is withdrawn from the top of the apparatus.

Somora et al U.S. Patent 3,628,667 described a decantation apparatus in the form of a horizontally elongated vessel (Col. 1, lines 66 to 68), of height approximately equal to width, in which a slurry inlet is positioned below the surface of the liquid inside the vessel. The discharge of clarified liquors is by launders located at the surface of the liquid, and a slurry feed enters the apparatus at effectively atmospheric pressure, since it is dispensed from a feed well open to the atmosphere. The basic concept resides in the fact that the suspension to be clarified is distributed in a distribution chamber and loading well evenly over the entire length of the decantation vessel (Col. 2, lines 62 to 64) which is realized by a distributor chamber extending lengthwise of the vessel substantially coextensive therewith in the top section (Col. 1, lines 74 to Col. 2, line 2).

In Casey, U.S. Patent 4,603,000, there is described an apparatus and process for flocculating and clarifying a solid-liquid slurry in a vertically oriented apparatus whose height is approximately equal to its diameter. An inlet for the deaerated and flocculated slurry is provided below the surface of the liquid inside the vessel and below the surface of the mud bed (Col. 2, line 48). Furthermore, the apparatus includes a preflocculating vessel extending into the top, and arranged coaxially with the clarifier tank (Col. 2 to Col. 13, line 21). A flocculating agent is added to the slurry as it passes downwardly under laminar flow through a vertical pipe arranged coaxially with the clarifier vessel. The direction of flow then is changed to become upwardly through a lower chamber for the formation of the flocs, and then its direction is changed again to flow downwardly through an annular passage surrounding the lower chamber and finally is introduced below the surface of the mud bed (Col. 3, lines 8 to 21). This apparatus includes a conical bottom section fitted with a slowly rotating rake that grazes the inner surfaces of the lower portion of the vessel. The discharge of clarified liquor is by launders located at the surface of the liquid, and the feed slurry is effectively at atmospheric pressure, since it is dispensed from a feed well open to the atmosphere.

Spetz, German OS 2 212 646, published August 3, 1972, describes a vertically oriented cylindrical decanter of height smaller than the diametr, having inlets for the feed slurry located below the surface of the liquid, just above the upper surface of the mud bed. The exit of clarified liquor is by launders located at the surface of the liquid and the entry of the feed slurry is effectively at atmospheric pressure, since it is dispensed from a feed well open to the atmosphere.

EP-A-0158714 describes a separator comprising an elaborate construction at the top of a conical section to provide a ring channel and diverting baffles. The feed slurry is introduced through inlet ports located in the wall at the height of the ring channel construction. There is sedimentation of the solids above the height of the inlet ports.

In alumina plants, associated with the production of aluminum, there is a need for an improved system for separating finely divided red mud solids from digestion liquors. It is the object of the present invention to provide a means whereby finely divided solids can be rapidly separated from a slurry at temperatures above the boiling point of the liquid.

### Summary of the Invention

One embodiment of this invention relates to a decantation apparatus which comprises a vertically elongated vessel having a cylindrical upper section and a bottom section and arranged to be filled to a predetermined liquid level in an upper region of the cylindrical upper section. Feed means are provided for feeding a suspension into the cylindrical section in a mid-region between the bottom of the vessel and the liquid level. Means are also provided for adding a flocculant to the suspension feed. A liquid outlet means is provided in an upper region of the cylindrical section below the liquid level for drawing off clarified liquid. A solids discharge is provided at the bottom of the vessel and means are also provided for controlling a solids component-liquid component interface at a predetermined level in a lower region of the cylindrical portion below the inlet. A rotatable rake means is provided in the bottom section and is adapted to remold the sedimented solids.

The apparatus is preferably tall relative to its diameter and typically has a height:diameter ratio of at least 2:1, preferably about 3 to 2:1. The liquid outlet may be at the predetermined liquid level or a distance below the liquid level, e.g. about 0.5-1.0 H, preferably 0.7-1.0 H, from the bottom of the vessel, where H is the height between the bottom of the bottom section and the liquid level. Of course, the outlet must always be above the inlet. The bottom section may have a variety of shapes, e.g. dished or flat.

Another embodiment of this invention comprises a process for flocculating and clarifying a solid-liquid suspension comprising the steps of providing an elongated vessel having a cylindrical upper section and a dished or flat bottom section and maintaining a liquid level in the vessel in an upper region of the cylindrical upper section. A suspension is fed into the cylindrical section in a mid-region between the bottom of the vessel and the liquid level, this suspension being fed under a positive pressure sufficient to overcome the hydrostatic head of the liquid in the vessel above the feed inlet. A flocculant is added to the suspension feed just before it is fed into the vessel and clarified liquid is drawn off from an upper region of the cylindrical section at or below the liquid level. The solids are discharged from the bottom of the vessel. A slurry-clarified liquid interface is maintained at a predetermined level in a lower region of the cylindrical portion below the feed inlet and the bottom section is continuously raked with a rotating rake means which moves through the deposited solids and remolds them, thereby preventing build-up of solids.

With the system of this invention, the height of liquor above the inlet and outlet points supplies a hydrostatic head in the vessel open to the atmosphere such as to permit the temperature of the suspension entering and the liquor leaving the vessel to be slightly above or at the atmospheric boiling point, without most of the contents of the vessel boiling, which would otherwise cause turbulence and reduce the rapidity of settling of the solids. Only the surface of the liquor, and the region just below the surface is slightly turbulent and appears to simmer, but the bulk of the liquor is quiescent. Being able to operate at and slightly above the atmospheric boiling point of the liquid has important advantages in that a higher temperatures the viscosity of the liquid is lower and rate of sedimentation is higher than at lower temperatures. Also, at higher temperatures the rate at which finely divided solids react with a flocculating agent is much more rapid than at lower temperatures. Furthermore, the operation at high temperatures, together with the continuous remolding of the deposited solids in the region of the bottom of the vessel by the rake reduces the build-up of scale, avoids "rat holing" and promotes formation of thick residue.

The above advantages are also obtained with outlet points which are located at the surface of the liquor in the vessel. With this arrangement, the discharge can be an uncontrolled gravity discharge and this eliminates any need for an outlet line control valve. With the gravity discharge, the temperature of the liquor discharging from the vessel is preferably maintained substantially at the atmospheric boiling point.

When separating red mud from caustic digestion liquors of the Bayer process, the high temperatures have the advantage of providing a reduced rate of precipitation of dissolved alumina from a supersaturated solution. Normally, the alumina precipitates out as gibbsite (Al₂O₃.3H₂O), and this is lost with the muds. The removal of the alumina from the solution represents a significant financial loss which can be avoided with the process of this invention which provides high temperatures and short residence times.

The suspension feed is preferably fed into the vessel at a temperature of about 106 to 108°C, but higher or lower temperatures may be used.

### Brief Description of the Drawing

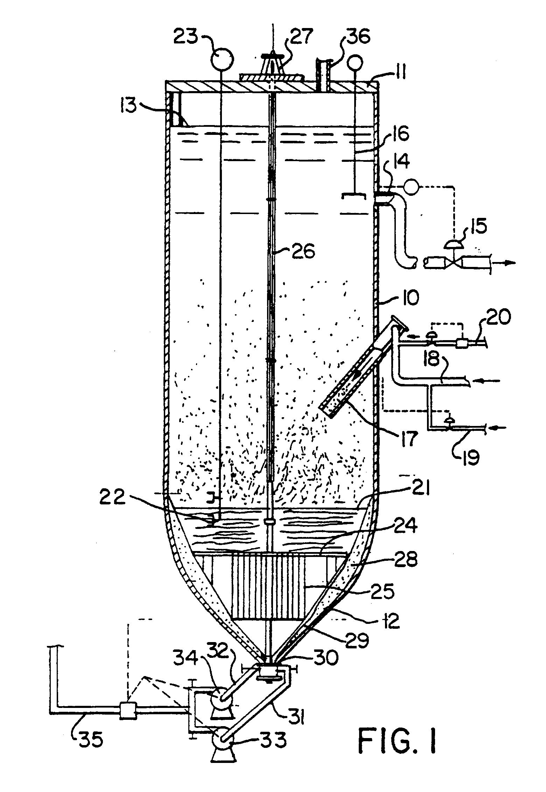

Figure 1 is a diagrammatic cross-section through an apparatus according to the present invention.

### Description of the Preferred Embodiments

One embodiment of the apparatus of the invention is shown in Figure 1 and this is in the form of a relatively tall vessel having a cylindrical portion 10 and a bottom dished portion 12. In one successful industrial embodiment, the vessel has a height of 23 m and a diameter of approximately 8 m with a dished bottom. The vessel is designed to operate at atmospheric pressure and is closed by a cover plate 11, which is vented to the atmosphere via vent 36. The walls and cover plate are preferably insulated to prevent heat losses, reduce scale growth and improve working conditions for the operating personnel.

A liquid level 13 is maintained in the vessel by controlling flow rates. Clarified liquid is drawn off from the vessel through an outlet 14 positioned below the liquid level 13. Control valve 15 can be used to vary the rate of discharge through outlet 14 to maintain the liquid level 13 at the desired level. The clarity of the liquor is monitored by a clarity meter 16, which may be an infra-red or ultrasonic detector.

The feed suspension is fed into the vessel through inlet tube 17 which is directed in a downward slope into the vessel, to direct the solids towards the center of the vessel. This tube 17 is connected to a suspension inlet line 18. It is desirable to maintain the temperature of the feed suspension within quite close tolerances and this temperature can be maintained by adding cooling liquor from another process stream through inlet line 19. A commercial flocculant is added to suspension feed line 18 by means of flocculant inlet line 20.

An interface 21 between slurry and clarified liquid is carefully maintained at a predetermined level by means of level sensors 22 and readout device 23.

In the dished section 12 there is provided a rotatable rake mechanism 24 with downwardly extending arms 25 arranged in a triangular configuration to be positioned relatively close to the inner conical wall of the vessel. The rake 24 is rotated by shaft 26 and motor/gear mechanism 27. This rake is similar to that disclosed in U.S. Patent 4,830,507.

The rake is typically positioned with the arm extremities about 15 to 30 cm from the inner wall of the bottom section, but other clearances may be used. Between the rake and the bottom section wall is a solids layer 28 consisting of stagnant mud. This mud is constantly remolded by the rake arms, thereby constantly exposing renewed surface 29 and preventing further build-up of solids.

At the bottom of the vessel is a discharge outlet 30 for discharging mud 28. Two draw off lines 31 and 32 are shown with corresponding pumps 33 and 34. One of these lines and pumps represents a spare. The outlets from the pumps is discharged through mud line 35.

In an alternative embodiment (not shown) of the apparatus described above, the outlet 14 is aligned with the liquid level 13. With this arrangement, the outlet 14 is in the form of an uncontrolled gravity discharge and the control valve 15 is eliminated. The remainder of the apparatus remains as shown in Figure 1.

A preferred operating technique is illustrated by the following example:

### Example 1

A test was carried out using the apparatus shown in Figure 1. The feedstock was a slurry obtained from the Bayer process produced by digesting bauxite with caustic solution to extract the alumina values. The feed slurry had a density of 1.23 T/m³ and a solids content of 2.37%. The feedstock was fed into the apparatus at a rate of 714 m³/hr.

The caustic liquor contained 145 g/l of dissolved Al₂O₃ and 220 g/l of total caustic, as Na₂CO₃.
The liquor temperature was 108°C.

A flocculant was added with the feedstock. It was 100% anionicity sodium polyacrylate, available from Allied Colloids under the trade mark ALCLAR 600.
The concentration of the flocculant solution was 1.6-2.5 g/l and it was added at a rate of 60 g/T of dry red mud. This resulted in the flow rate of about 480 to 750 l/hr.

The cooling fluid which was added with the feedstock was a caustic wash liquor and this was used at a variable flow rate of 0 to 50 m³/hr. The cooling fluid had a density of 1.12 T/m³, a temperature of 50-60°C and a total caustic (expressed as Na₂CO₃) of about 100-120 g/l.

This arrangement provided an overflow through outlet 14 which was a clear liquor flowing at a rate of 684 m³/hr. The overflow liquor had a density of 1.22 T/m³ and a solids content of 0.2% (200 mg/l). The temperature of the overflow liquid was 106.5-107°C.

The solids discharge through outlet 30 had a density of 1.60 T/m³ and a solids content of 40%. This solids underflow discharged at a rate of 30 m³/hr and was at a temperature of 105-106°C.

Although the present invention has been described and illustrated with respect to preferred features thereof, it is to be understood that various modifications and changes may be made to the specifically described and illustrated features without departing from the scope of the present invention.

## Claims

1. A decantation apparatus including a vertically elongated vessel having a cylindrical upper section (10) and a bottom section (12) capable of being filled to a predetermined liquid level (13) in an upper region of said cylindrical section (10); feed tube means (17) for feeding a suspension downwardly into the cylindrical section (10); means (20) for adding a flocculant to the suspension feed; liquid outlet means (14) in an upper region of the cylindrical section (10) at or below said liquid level (13) and above said feed tube means (17) for drawing off clarified liquid; solids discharge means (30) at the bottom of said vessel; means (22, 23) for controlling a slurry-clarified liquid interface (21) at a predetermined level; and rotatable rake means (24) in the bottom section (12) adapted to remold the sedimented solids and continuously expose renewed surfaces; characterized in that the vessel has a height to diameter ratio of at least 2:1, the feed tube means (17) feeds said suspension into said cylindrical section (10) in a mid-region between the bottom (12) of the vessel and the liquid level (13), and said feed means (17) includes means for injecting the feed under a positive pressure sufficient to overcome the hydrostatic head of the liquid in the vessel above the feed inlet (17).

2. A decantation apparatus according to claim 1 characterized in that said vessel has a height:diameter ratio of 2 to 3:1.

3. A decantation apparatus according to claim 1 or claim 2 characterized in that the rake means (24) is of triangular profile.

4. A decantation apparatus according to claim 1, claim 2 or claim 3 characterized in that the suspension feed tube means (17) comprises a feed tube extending into the vessel in a downwardly inclined direction.

5. A decantation apparatus according to any preceding claim characterized in that the liquid outlet means (14) is positioned at the liquid level (13).

6. A decantation apparatus according to claim 1, claim 2, claim 3 or claim 4, characterized in that the liquid outlet means (14) is positioned at a distance of about 0.5 to 1.0 H above the bottom (12) of the vessel, wherein H is the height between the bottom (12) of the vessel and the liquid level (13).

7. A decantation apparatus according to claim 1, claim 2, claim 3 or claim 4, characterized in that the liquid outlet means (14) is positioned at a distance of about 0.7 to 1.0 H above the bottom (12) of the vessel, wherein H is the height between the bottom (12) of the vessel and the liquid level (13).

8. A process for flocculating and clarifying a solid-liquid suspension, said process comprising the steps of providing a vertically elongated vessel having a cylindrical upper section (10) and a dished bottom section (12); maintaining a liquid level (13) in said vessel in an upper region of said cylindrical top section (10); feeding a suspension into the cylindrical section (10); adding a flocculant to the suspension feed before it is fed into the vessel; drawing off clarified liquid from an upper region of the cylindrical section (10) at or below the liquid level (13); discharging solids from the bottom (12) of the vessel; maintaining a slurry-clarified liquor interface (21) at a predetermined level in a lower region of the cylindrical portion (10) below the feed inlet (17) and raking the bottom dished section (12) with a rotating rake means (24) which remolds the sedimented solids and continuously exposes renewed surfaces; characterized in that the vessel has a height to diameter ratio of at least 2:1 and the suspension is fed into a mid region of the cylindrical section (10) between the bottom (12) of the vessel and said liquid level (13), said suspension being fed under a positive pressure sufficient to overcome the hydrostatic head of the liquid in the vessel above the feed inlet (17).

9. A process according to claim 8 characterized in that the temperature of the liquid in the vessel is at or above the atmospheric boiling point of the liquid.

10. A process according to claim 9 characterized in that the suspension feed enters the vessel at a temperature of about 106 to 108°C.

11. A process according to claim 8, claim 9 or claim 10 characterized in that the clarified liquid is drawn off at the liquid level (13).

12. A process according to claim 11 characterized in that the temperature of the liquid in the vessel is substantially at the atmospheric boiling point of the liquid.

13. A process according to claim 8, claim 9, claim 10, claim 11 or claim 12 characterized in that the solid-liquid suspension to be clarified is a caustic liquor containing red mud residues from the Bayer process.

## Patentansprüche

1. Dekantiervorrichtung, enthaltend ein vertikal sich erstreckendes Gefäßbehältnis mit einem zylindrischen Oberteil (10) und einem Bodenteil (12), welches auf einen vorbestimmten Flüssigkeitsspiegel (13) in einem oberen Bereich des genannten zylindrischen Teils (10) aufgefüllt werden kann;
Einspeisungseinrichtungen (17) zur Einspeisung einer Suspension in Abwärtsrichtung in den zylindrischen Teil (10); Einrichtungen (20) zur Zuführung eines Flockungsmittels zur Suspensionseinspeisung;
Flüssigkeitsauslaßeinrichtungen (14) in einem Oberbereich des zylindrischen Teils (10) beim oder unterhalb vom genannten Flüssigkeitsspiegel (13) und oberhalb der genannten Einspeisungseinleitungseinrichtungen (17) zum Abzug geklärter Flüssigkeit;
Feststoffaustragseinrichtungen (30) am Boden des Gefäßbehältnisses; Einrichtungen (22, 23) zur Steuerung einer Zwischenphase (21) von Aufschlämmung und geklärter Flüssigkeit auf einem vorbestimmten Niveau; sowie rotierbare Recheneinrichtungen (24) im Bodenteil (12), welche darauf abgestimmt sind, die sedimentierten Feststoffe umzuformen und erneuerte Oberflächen kontinuierlich freizulegen; dadurch **gekennzeichnet**, daß das Gefäßbehältnis ein Verhältnis von Höhe zu Durchmesser von mindestens 2:1 aufweist, die Zuspeisungsleitungseinrichtung (17) die genannte Suspension in den genannten zylindrischen Teil (10) in einem Mittelbereich zwischen dem Boden (12) des Behältnisses und dem Flüssigkeitsspiegel (13) einspeist, und daß die genannte Einspeiseinrichtung (17) Einrichtungen zur Injektion der Zuspeisung unter einem positiven Druck einschließt, der ausreicht, um den hydrostatischen Überstandsdruck der Flüssigkeit im Behältnis oberhalb des Zuspeisungseinlasses (17) zu überwinden.

2. Dekantiervorrichtung gemäß Anspruch 1, dadurch **gekennzeichnet,** daß das genannte Behältnis ein Verhältnis von Höhe:Durchmesser von 2 bis 3:1 aufweist.

3. Dekantiervorrichtung gemäß Anspruch 1 oder 2, dadurch **gekennzeichnet**, daß die Recheneinrichtung (24) ein Dreiecksprofil aufweist.

4. Dekantiervorrichtung gemäß Anspruch 1, 2 oder 3, dadurch **gekennzeichnet**, daß die Suspensionseinspeisungsleitungseinrichtung (17) ein Zuführungsrohr umfaßt, das sich in das Behältnis in nach unten geneigter Richtung erstreckt.

5. Dekantiervorrichtung gemäß jedem vorhergehenden Anspruch, dadurch **gekennzeichnet**, daß die Flüssigkeitsauslaßeinrichtung (14) auf Höhe des Flüssigkeitsspiegels (13) angeordnet ist.

6. Dekantiervorrichtung gemäß Anspruch 1, 2, 3 oder 4, dadurch **gekennzeichnet**, daß die Flüssigkeitsauslaßeinrichtung (14) in einem Abstand von ca. 0,5 bis 1,0 H über dem Boden (12) des Behältnisses angeordnet ist, worin H die Höhe zwischen dem Boden (12) des Behältnisses und dem Flüssigkeitsspiegel (13) ist.

7. Dekantiervorrichung gemäß Anspruch 1, 2, 3 oder 4, dadurch **gekennzeichnet**, daß die Flüssigkeitsauslaßeinrichtung (14) in einem Abstand von ca. 0,7 bis 1,0 H über dem Boden (12) des Behältnisses angeordnet ist, worin H die Höhe zwischen dem Boden (12) des Behältnisses und dem Flüssigkeitsspiegel (13) ist.

8. Verfahren zur Ausflockung und Klärung einer Fest-Flüssig-Suspension, wobei in dem genannten Verfahren Stufen umfaßt sind, in denen man ein vertikal sich erstreckendes Gefäßbehältnis mit einem zylindrischen Oberteil (10) und einem abgeschrägten Bodenteil (12) bereitstellt; einen Flüssigkeitsspiegel (13) im genannten Behältnis in einem oberen Bereich des zylindrischen Oberteils (10) aufrechterhält; eine Suspension in den zylindrischen Teil (10) einspeist; ein Flockungsmittel der Suspensionseinspeisung vor Zuführung in das Behältnis zufügt; geklärte Flüssigkeit aus einem oberen Bereich des zylindrischen Teils (10) beim oder über dem Flüssigkeitsspiegel (13) abzieht; Feststoffe aus dem Boden (12) des Behältnisses austrägt; eine Zwischenphase (21) von Aufschlämmung und geklärter Flüssigkeit auf einem vorbestimmten Niveau in einem oberen Bereich des zylindrischen Teils (10) unterhalb des Einspeisungseinlasses (17) festhält und den abgeschrägten Bodenteil (12) mit einer rotierenden Recheneinrichtung (24) durchrecht, welche die sedimentierten Feststoffe umformt und erneuerte Oberflächen kontinuierlich freilegt; dadurch **gekennzeichnet**, daß das Gefäßbehältnis ein Verhältnis von Höhe:Durchmesser von mindestens 2:1 aufweist und die Suspension in einen Mittelbereich des zylindrischen Teils (10) zwischen dem Boden (12) des Behältnisses und dem genannten Flüssigkeitsspiegel (13) eingespeist wird, wobei die genannte Suspension unter einem positiven Druck eingespeist wird, der ausreicht, um den hydrostatischen Überstanddruck der Flüssigkeit im Behältnis über dem Einspeisungeinlaß (17) zu überwinden.

9. Verfahren gemäß Anspruch 8, dadurch **gekennzeichnet,** daß die Temperatur der Flüssigkeit im Behältnis beim oder über dem atmosphärischen Siedepunkt der Flüssigkeit liegt.

10. Verfahren gemäß Anspruch 9, dadurch **gekennzeichnet,** daß die Suspensionseinspeisung in das Behältnis bei einer Temperatur von ca. 106 bis 108°C eintritt.

11. Verfahren gemäß Anspruch 8, 9 oder 10, dadurch **gekennzeichnet,** daß die geklärte Flüssigkeit beim Flüssigkeitsspiegel (13) abgezogen wird.

12. Verfahren gemäß Anspruch 11, dadurch **gekennzeichnet,** daß die Temperatur der Flüssigkeit im Behältnis im wesentlichen beim atmosphärischen Siedepunkt der Flüssigkeit liegt.

13. Verfahren gemäß Anspruch 8, 9, 10, 11 oder 12, dadurch **gekennzeichnet,** daß die zu klärende Fest-Flüssig-Suspension eine kaustische Flüssigkeit ist, enthaltend Rotschlammrückstande aus dem Bayer-Verfahren.

## Revendications

1. Appareil de décantation comportant une cuve allongée verticalement ayant une section supérieure (10) et une section inférieure (12) cylindriques pouvant être remplie à un niveau prédéterminé (13) de liquide dans une région supérieure de ladite section cylindrique (10); un dispositif de tube de chargement (17) pour charger une suspension vers le bas dans la partie cylindrique (10); un dispositif (20) pour ajouter un floculant à la charge en suspension; un dispositif de sortie du liquide (14) dans une région supérieure de la section cylindrique (10) au niveau ou au-dessous dudit niveau de liquide (13) et au-dessus dudit dispositif de tube de chargement (17) pour soutirer du liquide clarifié; un dispositif de déchargement des solides (30) au fond de ladite cuve; des dispositifs (22, 23) pour commander une interface schlamm-liquide clarifié (21) à un niveau prédéterminé; et un dispositif d'agitation tournant (24) dans la section du fond (12) adaptée pour agiter les solides sédimentés et exposer continuellement des surfaces renouvelées; caractérisé en ce que la cuve a un rapport hauteur sur diamètre d'au moins 2:1, le dispositif du tube de chargement (17) charge ladite suspension dans ladite section cylindrique (10) dans une région intermédiaire entre le fond (12) de la cuve et le niveau du liquide (13), et ledit dispositif de chargement (17) comporte un dispositif pour injecter la charge avec une pression positive suffisante pour surmonter la pression hydrostatique du liquide dans la cuve au-dessus de l'entrée de chargement (17).

2. Appareil de décantation selon la revendication 1 caractérisé en ce que ladite cuve a un rapport hauteur:diamètre de 2 à 3:1.

3. Appareil de décantation selon la revendication 1 ou la revendication 2 caractérisé en ce que le dispositif d'agitation (24) a un profil triangulaire.

4. Appareil de décantation selon la revendication 1, la revendication 2 ou la revendication 3 caractérisé en ce que le dispositif du tube de chargement de suspension (17) comprend un tube de chargement s'étendant dans la cuve dans une direction inclinée vers le bas.

5. Appareil de décantation selon l'une quelconque des revendications caractérisé en ce que le dispositif de sortie du liquide (14) est placé au niveau du liquide (13).

6. Appareil de décantation selon la revendication 1, la revendication 2, la revendication 3 ou la revendication 4, caractérisé en ce que le dispositif de sortie du liquide (14) est placé à une distance d'environ 0,5 à 1,0 H au-dessus du fond (12) de la cuve, dans lequel H est la hauteur entre le fond (12) de la cuve et le niveau du liquide (13).

7. Appareil de décantation selon la revendication 1, la revendication 2, la revendication 3 ou la revendication 4, caractérisé en ce que le dispositif de sortie de liquide (14) est placé à une distance d'environ 0,7 à 1,0 H au-dessus du fond (12) de la cuve, dans lequel H est la hauteur entre le fond (12) de la cuve et le niveau de liquide (13).

8. Procédé pour floculer et clarifier une suspension solide-liquide, ledit procédé comprenant les étapes de fourniture d'une cuve allongée verticalement ayant une section supérieure cylindrique (10) et une section de fond creux (12); maintien d'un niveau de liquide (13) dans ladite cuve dans une zone supérieure de ladite section du sommet cylindrique (10); chargement d'une suspension dans ladite section cylindrique (10); addition d'un floculant à la charge de suspension avant qu'elle soit introduite dans la cuve; soutirage du liquide clarifié par une zone supérieure de la section cylindrique (10) au niveau ou au-dessous du niveau du liquide (13); déchargement des solides par le fond (12) de la cuve; maintien d'une interface schlamm-liquide clarifié (21) à un niveau prédéterminé dans une zone inférieure de la partie cylindrique (10) en dessous de l'entrée de chargement (17) et agitation de la section creuse (12) avec un dispositif d'agitation (24) qui agite les solides sédimentés et expose continuellement des surfaces renouvelées; caractérisé en ce que la cuve a un rapport hauteur sur diamètre d'au moins 2:1 et la suspension est introduite dans une zone intermédiaire de la section cylindrique (10) entre le fond (12) de la cuve et ledit niveau de liquide (13), ladite suspension étant introduite sous une pression positive suffisante pour surmonter la pression hydrostatique du liquide dans la cuve au-dessus de l'entrée de chargement (17).

9. Procédé selon la revendication 8 caractérisé en ce que la température du liquide dans la cuve est au niveau ou au-dessus du point d'ébullition à la pression atmosphérique du liquide.

10. Procédé selon la revendication 9 caractérisé en ce que la charge de suspension pénètre dans la cuve à la température d'environ 106 à 108 °C.

11. Procédé selon la revendication 8, la revendication 9 ou la revendication 10 caractérisé en ce que le liquide clarifié est soutiré au niveau du liquide (13).

12. Procédé selon la revendication 11 caractérisé en ce que la température de liquide dans la cuve est essentiellement au point d'ébullition à la pression atmosphérique du liquide.

13. Procédé selon la revendication 8, la revendication 9, la revendication 10, la revendication 11 ou la revendication 12 caractérisé en ce que la suspension solide-liquide à clarifier est une solution caustique contenant des résidus de boues rouges du procédé Bayer.
